# FASCICULE DE BREVET EUROPEEN

(11) **EP 2 326 747 B1**
(45) Date de publication et mention de la délivrance du brevet: **11.03.2015**
(21) Numéro de dépôt: 09781302.6
(22) Date de dépôt: 30.07.2009
(51) Int. Cl.: C23C 18/31

(54) **PROCÉDÉ NON ÉLECTROLYTIQUE DE MÉTALLISATION EN LIGNE DE SUBSTRATS PAR PROJECTION AVEC TRAITEMENT DE SURFACE PRÉALABLE ET DISPOSITIF POUR LA MISE EN OEUVRE DU PROCÉDÉ**
NICHTELEKTROLYTISCHES INLINE-VERFAHREN ZUR METALLISIERUNG EINES SUBSTRATS MIT VORBEHANDLUNG DER OBERFLÄCHE UND VORRICHTUNG ZUR DURCHFÜHRUNG DES VERFAHRENS
IN LINE NON-ELECTROLYTIC PROCESS FOR THE METALLISATION OF A SUBSTRATE COMPRISING A PRETREATMENT OF THE SURFACE AND APPARATUS FOR CARRYING OUT THE PROCESS

(30) Priorité: 30.07.2008 FR 0855262
(43) Date de publication de la demande: 01.06.2011
(73) Titulaire: JET METAL TECHNOLOGIES, 69410 Champagne-Au-Mont-D'Or (FR)
(72) Inventeur: STREMSDOERFER, Samuel, F-69630 Chaponost (FR)
(74) Mandataire: Cabinet Plasseraud
(86) Numéro de dépôt international: PCT/EP2009/059889
(87) Numéro de publication internationale: WO 2010/012810

(56) Documents cités:
- WO-A-00/20656
- WO-A-2008/062070
- FR-A- 2 763 962
- US-A- 4 217 182
- US-A- 5 348 574
- US-A1- 2004 121 595
- US-B1- 6 268 016
- STREMSDOERFER G ET AL: "Copper deposition by Dynamic Chemical Plating" JOURNAL OF MATERIALS SCIENCE, SPRINGER / BUSINESS MEDIA, DORDRECHT, NL, vol. 38, 1 janvier 2003 (2003-01-01), pages 3285-3291, XP002442205 ISSN: 0022-2461

## Description

### DOMAINE TECHNIQUE

Le domaine technique de l'invention est celui du revêtement de surface de substrats par des films métalliques.

La présente invention concerne des procédés non électrolytiques de métallisation de substrats pour la décoration, par exemple applicables aux verres creux, au flaconnage, aux pièces cosmétiques, aux pièces pour l'aéronautique, pour l'automobile et la domotique. La présente invention vise également la métallisation non électrolytique de substrats pour l'électronique, notamment la réalisation de pistes conductrices.

### ART ANTERIEUR-PROBLEME TECHNIQUE

L'argenture du verre pour la fabrication des miroirs est l'une des plus anciennes applications industrielles de métallisation par voie chimique. Son procédé consiste à utiliser la gravité pour faire précipiter le métal, par immersion dans des bains de solutions métalliques contenant un sel métallique, un réducteur et un complexant. La surface doit être sensibilisée au préalable par application d'une solution acide de chlorure stanneux (SnCl₂). Cette étape de sensibilisation peut être complétée par une étape d'activation faisant intervenir une solution acide de chlorure de palladium (PdCl₂). Ces étapes sont coûteuses en énergie, en temps, en eau et les produits utilisés sont dangereux. La technique de l'argenture « classique » présente en outre de nombreux inconvénients et notamment :
- le verre est le seul substrat utilisable,
- la surface du substrat à métalliser doit être plane,
- l'instabilité des bains de dépôt,
- la cinétique de dépôt limitée à 20 pm d'épaisseur par heure,
- la difficulté technique liée au co-dépôt simultané de différents métaux,
- le spectre restreint des métaux ou alliages déposables,
- l'impossibilité d'obtenir des dépôts localisés,
- le caractère perfectible de l'adhérence sur les substrats des films métalliques déposés.

Pour remédier aux problèmes relatifs à la métallisation non électrolytique de substrats par immersion dans des bains de solutions métalliques, FR-A-2 763 962 et la demande de brevet français déposée sous le numéro 06 10287 divulguent un procédé non électrolytique de métallisation d'un substrat par projection d'un aérosol contenant un métal sous forme cationique (oxydant) et un réducteur. Dans le procédé perfectionné, l'étape de d'activation de la surface n'est pas obligatoire et une étape préalable de mouillage de la surface du substrat permet d'améliorer l'adhésion du film au substrat. Cependant, l'optimisation de l'industrialisation du procédé et l'amélioration des performances d'adhésion du film à la surface à métalliser en fonction de chaque substrat sont encore à prévoir.

Par ailleurs, le document « Copper déposition by Dynamic Chemical Plating » publié en 2003 dans le « Journal of Materials Science », volume 38, pages 3285-3291, traite de la réalisation de circuits imprimés par métallisation (cuivre) chimique de substrats plastiques (PET, ABS ou PVC). La surface à métalliser des substrats est dégraissée et soumise à un traitement Corona pour augmenter l'énergie de surface. La métallisation est effectuée ensuite par projection d'un aérosol contenant un métal sous forme cationique (oxydant) et un réducteur. Aucune couche de finition n'est appliquée sur le revêtement de métallisation ainsi obtenu. Un tel procédé ne tient compte ni des contraintes liées à l'aspect décoratif ni celles liées à l'adhérence des couches de métallisation sur les substrats en fonction de la nature desdits substrats et de la nature des métaux déposés.

La technique de l'argenture, développée plus haut, a été adaptée à la décoration. US-A-4 975 305 décrit un procédé de métallisation d'articles, notamment en matière plastique, par projection qui consiste à :
- appliquer une première couche de résine monocomposante,
- sécher,
- appliquer une solution aqueuse acide contenant du chlorure stanneux,
- rincer,
- projeter simultanément une solution aqueuse de nitrate d'argent contenant un complexe ammoniacal et une solution aqueuse de sucre réducteur,
- rincer,
- et appliquer un vernis de finition.

Ce procédé est mis en oeuvre à l'aide d'une installation manuelle qui ne permet pas une adaptation industrielle de sa procédure de métallisation. Cette technique ne donne pas de résultats satisfaisants en matière d'adhérence des films métalliques sur la surface du substrat car le procédé est mis en oeuvre de façon identique quel que soit le substrat (plastique, métal, bois, polymère...) et ne s'adapte donc pas aux caractéristiques de chaque support à métalliser.

### OBJECTIFS

Il serait donc souhaitable de disposer d'un procédé industriel de métallisation de la surface d'un substrat par voie non électrolytique et par projection d'une ou plusieurs solutions oxydo-réductrices qui satisfasse à au moins l'un des objectifs suivants :
- le procédé devrait favoriser l'adhésion du film métallique à la surface du substrat,
- le procédé devrait être « propre », c'est-à-dire utiliser des solutions peu ou non toxiques ou en très faible quantités et permettre le recyclage des effluents issus du procédé,
- le procédé devrait être mis en oeuvre à l'aide d'une installation compacte s'intégrant dans des lignes de vernissage couramment utilisées, par exemple de longueur de cabine allant de 1 m à 5 m, et permettre le traitement des substrats sur des lignes automatisées,
- le procédé devrait aussi s'adapter à chaque substrat dans le but d'optimiser au maximum l'adhérence du film au substrat et l'aspect décoratif,
- le procédé doit permettre d'obtenir des revêtements décoratifs de plusieurs types (argent, cuivre, nickel...) en ligne dans des installations traditionnelles industrielles de laquage,
- le procédé doit permettre d'obtenir un dépôt métallique décoratif caractérisé de « blanc » se substituant parfaitement au dépôt d'aluminium sous vide.

Un autre objectif de l'invention est de fournir un dispositif pour la mise en oeuvre de la totalité d'un tel procédé de métallisation en ligne de substrats.

### BREVE DESCRIPTION DE L'INVENTION

Or après de longues recherches la demanderesse a découvert qu'un traitement préalable de la surface du substrat à métalliser permettait notamment d'augmenter l'adhésion du film métallique au substrat et l'aspect décoratif

C'est pourquoi la présente invention a pour objet un procédé de métallisation de la surface d'un substrat caractérisé en ce que l'on met en oeuvre les étapes suivantes :
a. traitement physique du substrat avant métallisation de sorte que l'énergie de surface du substrat soit supérieure ou égale à 50 dynes, le traitement physique étant choisi parmi les traitements suivants : un flammage un traitement corona, un traitement plasma et leurs combinaisons,
b. métallisation non électrolytique de la surface du substrat traitée à l'étape a., par projection d'une ou plusieurs solutions oxydo-réductrices sous forme d'aérosol(s),
c. réalisation d'une couche de finition sur la surface métallisée, qui est l'application d'une composition liquide réticulable ou un épaississement électrolytique de la surface métallisée.

Dans l'étape a., le traitement physique est choisi soit parmi les traitements suivants : un flammage, un traitement corona, un traitement plasma et leurs combinaisons ; soit de preférence parmi les traitements suivants : un flammage, un traitement plasma et leurs combinaisons. De préférence, le traitement physique de l'étape a est un traitement par flammage.
En outre, le traitement physique est avantageusement un traitement par flammage et/ou par plasma, lorsque le substrat est un substrat rigide en matière plastique, en matériau composite, en polymère ou un support souple en polymère, métal tel qu'un feuillard de métal, textile ou papier.
Le flammage est, par exemple, le passage du substrat à métalliser sous une flamme dont la température est e.g. de 1200°C à 1700°C. La durée du flammage est généralement de 4 à 50 secondes. La flamme est de préférence obtenue par combustion d'un carburant tel le gaz butane (ou gaz de ville) en présence d'un comburant comme l'oxygène.
Le traitement (par) plasma correspond, par exemple, au passage du substrat à métalliser dans une torche à plasma, par exemple celles commercialisées par ACXYS^{®} ou PLASMATREAT^{®}.

Un traitement chimique peut être choisi parmi les traitements suivants : application d'une solution à base de silane, une dépassivation de la surface à l'aide d'une ou plusieurs solutions acides, un polissage à base d'oxyde de terres rares, une fluoration et leurs combinaisons.
De façon encore plus préférentielle, le traitement chimique est une application d'une solution à base de silane, une dépassivation par projection d'une ou plusieurs solutions acides, une fluoration ou leurs combinaisons.
En outre, ce traitement chimique peut être mis en oeuvre lorsque le substrat est un substrat rigide en verre creux, métal ou alliage.
Une « dépassivation » signifie par exemple que la surface du substrat est corrodée jusqu'à élimination de la couche d'oxyde la la recouvrant, par l'action d'une substance corrosive projetée sur le substrat, telle une solution d'acide fort, par exemple à base d'acide nitrique, citrique, sulfurique et leurs mélanges.
Le « polissage à base d'oxyde de terre rare » signifie par exemple que l'on applique sur le substrat à métalliser une solution à base d'oxyde de terre rare et que des patins viennent polir la surface du substrat, notamment par frottement contre sa surface, jusqu'à obtenir l'élimination d'une éventuelle couche d'oxyde présente à la surface et le lissage de celle-ci. De préférence, la solution à base d'oxyde de terre rare est une solution à base d'oxyde de cérium, qui est par exemple du type de celle commercialisée par la société POLIR-MALIN^{®} sous le nom GLASS POLISHING^{®}. De préférence, le polissage à base d'oxyde de terre rare comprend une étape de rinçage de la surface ainsi polie, notamment à l'eau distillée.
La fluoration correspond par exemple à la mise en contact, dans une enceinte sous pression réduite, du substrat à métalliser et d'une solution gazeuse à base de gaz inerte (argon) contenant un additif au fluor. Selon l'invention, la fluoration est réalisée par exemple avec un appareillage du type de ceux commercialisés par AIR LIQUIDE^{®}.

Le traitement physique du substrat intervient préférablement juste avant l'étape b. de métallisation, sans étape intermédiaire. La durée entre les étapes a. et b. ne peut excéder quelques minutes. Par exemple, la durée entre les étapes a. et b. doit être inférieure à 30 minutes, de préférence inférieure à 10 minutes et plus préférentiellement l'étape b. doit intervenir immédiatement après l'étape a.

Dans l'étape b. de métallisation, le métal est avantageusement choisi :
→ soit dans le groupe de métaux suivants : argent, nickel, étain, leurs alliages et leurs juxtapositions ;
→ soit dans le groupe de métaux suivants : argent, nickel, étain, cuivre, leurs alliages et leurs juxtapositions ;
l'argent étant particulièrement préféré.
Par « juxtaposition de métaux », on désigne par exemple dans le présent exposé plusieurs métaux ne formant pas un alliage.

La ou les solution(s) oxydo-réductrice(s) de cette étape b. correspond(ent) par exemple :
- soit à une seule solution contenant à la fois un ou plusieurs oxydants et un ou plusieurs réducteurs,
- soit à deux solutions : la première contenant un ou plusieurs oxydants et la seconde contenant un ou plusieurs réducteurs,
- soit à une pluralité de solutions chacune contenant soit un ou plusieurs oxydants soit un ou plusieurs réducteurs, à la condition qu'il y ait au moins une solution oxydante et au moins une solution réductrice.

L'étape c. peut être avantageusement un vernissage et/ou un épaississement métallique électrolytique.

Dans le présent exposé, les termes au singulier s'entendent également au pluriel et réciproquement.

### DESCRIPTION DETAILLEE DE L'INVENTION

### Substrats :

Dans des conditions préférentielles de mise en oeuvre du procédé ci-dessus décrit, le substrat est un substrat rigide. Celui-ci est par exemple choisi parmi les composés suivants : le verre, les matières plastiques, les métaux, les matériaux composites comme le copolymère Acrylonitrile-Butadiène-Styrène chargé par de la fibre de verre, les alliages et les polymères. De préférence, le substrat rigide est choisi parmi les composés suivants : les substrats en verre creux, les matières plastiques, les métaux, les matériaux composites comme le copolymère Acrylonitrile-Butadiène-Styrène chargé par de la fibre de verre, les alliages et les polymères. On préfère particulièrement les substrats en verre creux et les polymères.

Au sens de l'invention, un substrat en verre creux est un substrat en verre non plan, notamment un conteneur en verre comme un flacon ou une bouteille en verre.

Dans d'autres conditions préférentielles de mise en oeuvre du procédé de l'invention, le substrat est un substrat souple. Il est par exemple choisi parmi les composés suivants : les polymères, les métaux, les textiles, les feuillards de métaux et le papier. De préférence, le substrat souple est un textile ou un film polymère. Par exemple, le substrat souple est un film polyéthylène dont l'épaisseur est de 100 µm à 5 mm, un tissu ou une feuille de papier dont la densité est de 50 à 600 g/m2.

Dans la présente invention, on entend par substrat souple, un substrat qui peut être courbé, plié par la seule force de l'homme sans casser ni s'abîmer.

Par opposition, dans la présente invention, on entend par substrat rigide un substrat qui ne peut être courbé, plié par la seule force de l'homme sans casser ni s'abîmer.

### Etape a. : traitement physique:

Le traitement physique du substrat doit être réalisé de sorte que l'énergie de surface du substrat soit supérieure ou égale à 50 ou à 55 dynes, de préférence supérieure ou égale à 60 ou 65 dynes, et encore plus préférentiellement supérieure ou égale à 70 dynes. En dessous de ces valeurs, le mouillage du substrat est insuffisant et le revêtement métallique obtenu après métallisation présente des caractéristiques d'adhérence, de brillance et de réflectivité insatisfaisantes. La valeur de l'énergie de surface, qui est inversement proportionnelle à la valeur de la tension de surface, peut être mesurée par exemple par des techniques connues de l'homme de l'art consistant à appliquer sur le substrat, à l'aide d'un pinceau ou d'un feutre, une solution spécifique et de mesurer la rétractation de la solution ainsi appliquée.

Comme on l'a vu, le traitement physique de la surface du substrat a pour effet de diminuer la tension de surface du substrat et donc d'augmenter la mouillabilité de ce substrat par les solutions qui sont ensuite projetées. Par exemple, l'effet peut provenir d'une modification de la surface, c'est-à-dire une oxydation dans le cas du flammage et une création de liaisons de type oxygène pour le plasma.

Lorsque le substrat à métalliser est une matière plastique ou un polymère, le traitement physique de la surface est avantageusement un flammage.

Lorsque le substrat à métalliser est un support souple, le traitement de la surface par flammage est préféré.

### Etape b. de métallisation non électrolytique :

Dans le procédé selon l'invention, l'étape de métallisation non électrolytique comprend, dans l'ordre, au minimum les étapes suivantes :
- projection d'une ou plusieurs solutions oxydo-réductrices sous forme d'aérosol,
- rinçage.

Selon une première possibilité, l'étape de métallisation non électrolytique comprend, dans l'ordre, les étapes suivantes :
- mouillage de la surface,
- projection d'une ou plusieurs solutions oxydo-réductrices sous forme d'aérosol,
- rinçage,
- éventuellement séchage.

Selon une deuxième possibilité, l'étape de métallisation non électrolytique comprend, dans l'ordre, les étapes suivantes :
- sensibilisation de la surface, de préférence avec une solution à base de SnCl₂,
- rinçage,
- projection d'une ou plusieurs solutions oxydo-réductrices sous forme d'aérosol,
- rinçage,
- éventuellement séchage.

Selon une troisième possibilité, l'étape de métallisation non électrolytique comprend, dans l'ordre, les étapes suivantes :
- sensibilisation de la surface, de préférence avec une solution à base de SnCl₂,
- rinçage,
- projection d'une solution dite « d'activation blanche »,
- projection d'une ou plusieurs solutions oxydo-réductrices sous forme d'aérosol,
- rinçage,
- éventuellement séchage.

Par «solution dite "*d'activation blanche*" », on entend une solution d'oxydant métallique défini ci-après, dilué avec une solution contenant des tensioactifs anioniques, cationiques ou neutres.

### Projection :

Les solutions oxydo-réductrices utilisées au cours de l'étape de métallisation non électrolytique sont projetées sous forme d'aérosols sur le substrat et sont de préférence obtenues à partir de solutions, avantageusement aqueuses, d'un ou plusieurs cations métalliques oxydants et d'un ou plusieurs composés réducteurs. Ces solutions oxydo-réductrices sont obtenues de préférence par dilution de solutions mères concentrées. Le diluant est de préférence de l'eau.

Il s'ensuit que selon une disposition préférée de l'invention, on réalise l'(ou les) aérosol(s) de projection par nébulisation et/ou atomisation de solution(s) et/ou de dispersion(s), de manière à obtenir un brouillard de gouttelettes de taille inférieure à 100 µm, de préférence à 60 µm, et plus préférentiellement encore de 0,1 à 50 µm.

Dans le procédé selon l'invention, la projection de solutions métalliques a lieu de préférence de manière continue et le substrat est mis en mouvement et soumis à la projection. Par exemple, lorsque le dépôt métallique est à base d'argent, la projection est continue. Pour un dépôt métallique à base de Nickel par exemple, la projection se fait en alternance avec des temps de relaxation.

Dans le procédé de l'invention, la projection a une durée de 0,5 à 200 secondes, de préférence de 1 à 50 secondes et plus préférentiellement encore de 2 à 30 secondes pour une surface à métallise de 1 dm². La durée de projection a un effet sur l'épaisseur du dépôt métallique et donc sur l'opacité de ce dépôt. Pour la plupart des métaux, si la durée de projection est inférieure à 15 secondes, le dépôt est qualifié de semi-transparent et si la durée de projection est supérieure à 15 secondes, le dépôt est qualifié d'opaque. Le substrat peut être mis en rotation au moins partielle au cours de la projection de métallisation.

Suivant une première méthode de projection, on projette simultanément sur la surface à traiter, dans un ou plusieurs aérosols, une ou plusieurs solutions de cation(s) métallique(s) et une ou plusieurs solutions de réducteur(s) de manière continue. Dans ce cas de figure, le mélange entre la solution oxydante et la solution réductrice peut s'effectuer juste avant la formation de l'aérosol de projection ou bien encore par fusion d'un aérosol produit à partir de la solution oxydante et d'un aérosol produit à partir de la solution réductrice, de préférence avant l'entrée en contact avec la surface du substrat à métalliser.

Conformément à une deuxième méthode de projection, on projette successivement, par l'intermédiaire d'un ou plusieurs aérosols, une ou plusieurs solutions de cation(s) métallique(s) puis une ou plusieurs solutions de réducteur(s). En d'autres termes, la projection de la solution oxydo-réductrice est effectuée par projection(s) séparée(s) d'une ou plusieurs solutions d'un ou plusieurs oxydants métalliques et d'une ou plusieurs solutions d'un ou plusieurs réducteurs. Cette deuxième possibilité correspond à une projection alternée de la ou des solutions réductrices et du ou des sels métalliques.

Dans le cadre de la deuxième méthode de projection, l'association de plusieurs cations métalliques oxydants pour former une multicouche de métaux ou d'alliages différents, est telle que les différents sels sont, de préférence, projetés naturellement séparément du réducteur mais également séparément les uns des autres et successivement. Il va de soi qu'outre la nature différente des cations métalliques, il est envisageable d'utiliser des contre-anions différents entre eux.

Selon une variante de l'étape de projection, on fait en sorte que le mélange du ou des oxydants et du ou des réducteurs soit métastable et, après projection du mélange, on active ce dernier de sorte que se déclenche la transformation en métal, de préférence par mise en contact avec un amorceur, avantageusement apporté par l'intermédiaire d'un ou plusieurs aérosols, avant, pendant ou après la projection du mélange réactionnel. Cette variante permet de pré-mélanger l'oxydant et le réducteur tout en retardant leur réaction jusqu'à ce qu'ils tapissent la surface du substrat après projection. L'amorçage ou l'activation de la réaction est ensuite obtenu par tout moyen physique (température, UV...) ou chimique approprié.

Au-delà des considérations méthodologiques présentées ci-dessus et illustrées ci-après dans les exemples, il convient de donner quelques informations plus précises quant aux produits mis en oeuvre dans le procédé selon l'invention.

L'eau apparaît comme étant le solvant le mieux adapté, sans exclure toutefois la possibilité d'utiliser des solvants organiques, pour la production des solutions à partir desquelles seront produits les aérosols projetés.

Les solutions oxydo-réductrices projetées au cours de l'étape de métallisation du substrat sont une ou plusieurs solutions d'un oxydant métallique et une ou plusieurs solutions d'un réducteur.

Les concentrations en sels métalliques dans la solution oxydante à projeter sont de 0,1 g/l à 100 g/l et de préférence de 1 à 60 g/l, et les concentrations en sels métalliques des solutions mères sont de 0,5 g/l à 10³ g/l, ou bien le facteur de dilution des solutions mères est de 5 à 500. Avantageusement, les sels métalliques sont choisis parmi le nitrate d'argent, le sulfate de nickel, le sulfate de cuivre, le chlorure d'étain, et leurs mélanges.

La sélection des réducteurs est faite de préférence parmi les composés suivants : les borohydrures, le diméthylaminoborane, l'hydrazine, l'hypophosphite de sodium, le formol, l'aluminohydrure de lithium, les sucres réducteurs comme les dérivés de glucose ou l'erythorbate de sodium, et leurs mélanges. La sélection du réducteur impose de tenir compte du pH et des propriétés visées pour le film de métallisation. Ces ajustements de routine sont à la portée de l'homme du métier. Les concentrations en réducteur dans la solution réductrice à projeter sont de 0,1 g/l à 100 g/l et de préférence de 1 à 60 g/l, et les concentrations en réducteur des solutions mères sont de 0,5 g/l à 10³ g/l, ou bien le facteur de dilution des solutions mères est de 5 à 100.

Selon une disposition particulière de l'invention, des particules sont incorporées à au moins l'une des solutions oxydo-réductrices pour être projetées au moment de la métallisation. Les particules sont ainsi piégées dans le dépôt métallique. Ces particules dures sont par exemple du diamant, de la céramique, des nanotubes de carbone, des particules métalliques, des oxydes de terres rares, du PTFE (Polytétrafluoroethylène), du graphite, des oxydes métalliques et leurs mélanges. L'incorporation de ces particules au film métallique confère des propriétés mécaniques, tribologiques, électriques, fonctionnelles et esthétiques particulières au substrat métallisé.

### Rinçage :

Avantageusement, l'étape de rinçage, c'est-à-dire la mise en contact de tout ou partie de la surface du substrat avec une ou plusieurs sources de liquide de rinçage, est réalisée par projection d'un aérosol de liquide de rinçage, de préférence de l'eau.

### Séchage :

Le séchage consiste en l'évacuation de l'eau de rinçage. Il peut avantageusement être réalisé à une température de 20 à 40 °C à l'aide par exemple d'un système air comprimé pulsé à 5 bars/air pulsé à une température de 20 à 40°C.

### Mouillage :

L'étape préalable de mouillage ci-dessus évoquée consiste à revêtir d'un film liquide la surface du substrat pour favoriser l'étalement des solutions oxydo-réductrices. Le choix du liquide de mouillage s'effectue dans le groupe suivant : l'eau désionisée ou non, éventuellement additionnée avec un ou plusieurs tensioactifs anioniques, cationiques ou neutres, une solution alcoolique comprenant un ou plusieurs alcools (par exemple l'isopropanol, l'éthanol et leur mélange), et leurs mélanges. Notamment, on choisit, comme liquide de mouillage, de l'eau désionisée additionnée avec un tensioactif anionique et de l'éthanol. Dans une variante de mouillage selon laquelle on transforme le liquide de mouillage en vapeur que l'on projette sur le substrat sur lequel elles condensent, il est préférable que le liquide soit essentiellement aqueux pour des raisons évidentes de convenance industrielle. La durée de mouillage dépend de la surface du substrat considérée et du débit de projection de l'aérosol de mouillage.

### Sensibilisation :

Selon un mode de réalisation particulier de l'invention, une étape de sensibilisation de la surface du substrat peut être mise en oeuvre au moyen d'une solution de sensibilisation, notamment de chlorure stanneux, par exemple conformément au mode de mise en oeuvre décrit dans FR-A-2 763 962. Dans ce cas, une étape de rinçage à l'aide d'un liquide de rinçage tel que décrit plus haut est réalisée juste après l'étape de sensibilisation, sans étape intermédiaire.

Selon un mode préféré de réalisation du procédé, la métallisation non électrolytique est de l'argenture.

Tous les modes de réalisation de la métallisation non électrolytique au sens de l'invention sont plus précisément décrits dans FR-A-2 763 962 et la demande de brevet français déposée sous le numéro 06 10287.

### Activation banche :

Selon une disposition particulière de l'invention, une étape supplémentaire dite « activation blanche » est mise en oeuvre entre l'étape de rinçage qui suit l'étape de sensibilisation et la phase de métallisation non électrolytique. Cette étape consiste à projeter une solution « d'activation blanche » décrite précédemment. L'introduction de cette étape dans le procédé permet l'obtention d'un revêtement très « blanc », c'est-à-dire un revêtement dont la réflectivité est homogène dans le visible. Ce type de revêtement concerne essentiellement les dépôts d'argent, qui présentent naturellement une couleur jaunâtre non souhaitée du point de vue décoratif. Cette étape d'activation blanche donne pour résultat un dépôt métallique très blanc qui se substitue parfaitement au dépôt d'aluminium sous vide, tout en évitant les contraintes de manipulation liées à la mise sous cloche à vide. Cette étape « d'activation blanche » favorise la structuration moléculaire du revêtement ce qui permet une bonne planéité et une bonne homogénéité du dépôt. Ainsi effectuée, la métallisation confère une bonne réflectivité au substrat et un aspect plus « blanc ». Cette étape est suivie de l'étape de projection des solutions oxydo-réductrices de métallisation non électrolytique décrite plus haut. La durée s'écoulant entre l'étape d'activation blanche et l'étape de projection des solutions oxydo-réductrices de métallisation non électrolytique est de préférence comprise entre 1 et 30 secondes, de préférence entre 1 et 15 secondes.

### Etape c. de réalisation d'une couche de finition :

Selon un premier mode de mise en oeuvre du procédé selon l'invention, l'étape c. est l'application d'une composition liquide réticulable sur la surface métallisée, de préférence un vernis de finition. Ce vernis peut être à base hydrosoluble ou organique, de préférence hydrosoluble. Il est choisi, selon le substrat, parmi les composés suivants : les alkydes, les polyuréthanes, les époxys, les vinyles, les acryliques et leurs mélanges. De préférence, il est choisi parmi les composés suivants : les époxys, les alkydes et les acryliques et, plus préférentiellement encore, il s'agit d'un vernis époxy. La composition liquide réticulable de finition peut être réticulée par UV ou cuisson et peut contenir des pigments pour la coloration. Lorsque l'étape c. est l'application d'une composition liquide réticulable, alors, de préférence, on procède à la sous-étape de séchage de la surface métallisée lors de l'étape de métallisation non électrolytique.

Cette étape de réalisation d'une couche de finition peut être éventuellement précédée d'une étape de projection d'un primaire d'adhérence afin d'optimiser la cohésion entre la couche métallique et la couche de vernis de finition. Le primaire d'adhérence est de préférence une solution à base de silane.

Selon un deuxième mode de mise en oeuvre du procédé selon l'invention, l'étape c. de réalisation d'une couche de finition est la réalisation d'un épaississement électrolytique de la surface métallisée. Lorsque l'étape c. est la réalisation d'un épaississement électrolytique, alors, de préférence, on ne procède pas au séchage de la surface du substrat dans l'étape de métallisation non électrolytique.
L'épaississement électrolytique se fait de préférence par immersion du substrat au moins partiellement métallisé dans un bain d'une solution contenant des électrolytes et par passage d'un courant électrique suffisant entre une électrode présente dans le bain électrolytique et le substrat au moins partiellement métallisé. Dans le cadre de l'invention, les électrolytes sont des ions métalliques aptes à se déposer sur la surface métallisée du substrat, par exemple choisis parmi des ions des métaux suivants : nickel, argent ou cuivre, comme Ni²⁺, Ag⁺ et Cu²⁺. La technique de l'épaississement électrolytique est bien connue de l'homme du métier. Par exemple, la quantité de courant nécessaire à la réalisation d'une couche de cuivre de 1 µm sur un substrat ayant une surface métallisée de 1 dm² est de 0,5 à 20 A.s, à partir d'une solution d'ions Cu²⁺ à 250 g/l. Généralement, l'épaisseur de la couche de finition réalisée par épaississement électrolytique est de 2 à 40 µm. Lorsque la couche de finition est réalisée par épaississement électrolytique, le substrat est de préférence partiellement métallisé. La métallisation partielle est possible notamment par masquage d'une partie de la surface du substrat avant métallisation.

Dans d'autres conditions préférentielles de mise en oeuvre de l'invention, le substrat est soumis, préalablement à l'étape a., aux étapes suivantes :
§ prétraitement d'accrochage de la surface du substrat,
§ application d'une ou plusieurs couches d'un revêtement de base, de préférence un vernis.

Le prétraitement d'accrochage de la surface du substrat est par exemple un traitement plasma ou par flammage ou un traitement chimique de surface tel que décrit précédemment.

Selon un mode de réalisation particulier de l'invention, le substrat est soumis, préalablement à l'étape a soit à un prétraitement d'accrochage de la surface soit à une application d'une ou plusieurs couches d'un revêtement de base.

Par exemple, lorsque le prétraitement d'accrochage du substrat est une fluoration, cela permet de s'affranchir de l'étape d'application de revêtement de base. Le prétraitement d'accrochage est indispensable lorsque le substrat est par exemple en polypropylène.

La couche de revêtement de base est de préférence un vernis à base hydrosoluble ou organique, de préférence hydrosoluble, choisi, selon le substrat, parmi les composés suivants : les alkydes, les polyuréthanes, les époxys, les vinyles, les acryliques et leurs mélanges. De préférence, il est choisi parmi les composés suivants : les époxys, les alkydes et les acryliques et, plus préférentiellement encore, il s'agit d'un vernis époxy. Le revêtement de base permet de lisser la surface du substrat. Le revêtement de base peut être réticulé par UV ou cuisson et peut contenir des pigments pour la coloration.

Dans le procédé selon l'invention, les effluents issus des différentes étapes du procédé sont avantageusement retraités et recyclés pour être réutilisés dans le procédé, et pour limiter l'impact écologique.

Dans le procédé ci-dessus décrit, le retraitement et le recyclage des effluents comprennent, dans l'ordre, au minimum les étapes suivantes :
- récupération des effluents, notamment des eaux souillées, dans un conteneur,
- distillation, de préférence dans un évaporateur,
- réutilisation du distillat dans le procédé de métallisation par exemple comme eau de rinçage ou comme diluant des solutions mères oxydo-réductrices, ou rejet à l'égout.

De préférence, dans le procédé ci-dessus décrit, le retraitement et le recyclage des effluents comprennent, dans l'ordre, les étapes suivantes :
- récupération des effluents, notamment des eaux souillées, dans un conteneur,
- éventuellement ajout d'un floculant,
- éventuellement décantation,
- éventuellement séparation du filtrat et des boues, notamment par filtration,
- éventuellement neutralisation du filtrat, notamment élimination de l'ammoniac, par ajout d'acide en contrôlant le pH,
- distillation du filtrat, de préférence dans un évaporateur,
- éventuellement passage sur un système de charbon actif,
- réutilisation du distillat dans le procédé de métallisation par exemple comme eau de rinçage ou comme diluant des solutions mères oxydo-réductrices ou rejet à l'égout.

Le floculant ajouté aux effluents est de préférence un polymère organique chargé, comme ceux commercialisés par SNF FLOERGER^{®}.

La séparation du surnageant et des boues se fait avantageusement par filtration sur fritté, ou par débordement.

Les boues peuvent alors être évacuées et acheminées vers un centre spécialisé de retraitement ou de revalorisation des déchets.

Le filtrat obtenu peut être neutralisé, notamment par ajout d'une solution d'acide de normalité de 0,1 N à 10 N et jusqu'à ce que le filtrat atteigne un pH de 5 à 6. Les acides utilisés pour neutraliser notamment l'ammoniac présent dans le filtrat sont choisis parmi l'acide chlorhydrique, l'acide sulfurique, l'acide nitrique et leurs mélanges.

La distillation du filtrat est réalisée de préférence au moyen d'un évaporateur, et le filtrat est chauffé à une température de 90 à 120°C. Le résidu resté au fond du bouilleur en fin de distillation est évacué pour être acheminé vers un centre spécialisé de retraitement ou de revalorisation des déchets. L'eau distillée peut être réutilisée dans le procédé de métallisation, et notamment pour la dilution des solutions mères ainsi que pour les étapes de rinçage et de mouillage.

Les avantages du procédé selon l'invention sont nombreux. Le traitement de la surface, spécifique à chaque type de substrat, permet de contrôler la réaction de métallisation et d'améliorer l'adhésion du film métallique à la surface. Les substrats obtenus, et notamment les substrats obtenus par métallisation avec de l'argent, ont une réflectivité homogène dans le visible (400-800 nm) et réfléchissent toutes les longueurs d'ondes, y compris dans le bleu. De telles réflectivités n'étaient pas atteintes par les procédés de l'art antérieur. De plus, les effluents rejetés par le procédé, qui représentent, à l'échelle industrielle, plus d'une tonne par jour, sont retraités et réutilisés dans le procédé. L'eau distillée qui sort du module de retraitement est pure et peut être utilisée telle quelle pour la dilution des solutions mères d'oxydant et de réducteur, ainsi que pour le rinçage et le mouillage. Cet avantage est non négligeable, d'une part, d'un point de vue économique, car la consommation d'eau est significativement réduite et, d'autre part, d'un point de vue écologique, car la quantité de déchets à évacuer est considérablement diminuée. Il est important de remarquer que l'eau industrielle n'est pas utilisable dans le procédé, et qu'une étape de purification serait nécessaire si le procédé ne disposait pas d'un module de retraitement des effluents et de purification de l'eau souillée. En outre, le procédé utilise des solutions mères concentrées qui sont diluées sur place juste avant la métallisation. Le volume de solutions mères à transporter est donc moindre que si les solutions étaient déjà diluées, ce qui diminue les coûts, notamment de transport.

Par ailleurs, les quantités de réducteur utilisées sont inférieures à la norme autorisée (ISO 14001), ce composé étant toxique pour l'environnement, la diminution des quantités utilisées représente un avantage écologique important.

En outre, l'épaississement électrolytique réalisé selon un mode particulier de l'invention, présente l'avantage d'être sélectif : il n'a lieu que sur la surface métallisée du substrat, ce qui permet de créer des motifs métallisés en relief, comme des pistes conductrices.

La présente demande a aussi pour objet un procédé de métallisation de substrats, tel que défini dans la description ci-dessus, dans lequel on traite en ligne sans rupture de chaîne, une pluralité de substrats. Notamment, le procédé de métallisation selon l'invention ne nécessite aucune étape de manipulation, mises à part les étapes de chargement du substrat à métalliser et de déchargement du substrat métallisé.

Le procédé décrit ci-dessus est avantageusement mis en oeuvre au moyen d'un dispositif industriel de métallisation qui comprend les éléments suivants :
§ un module de traitement physique de surface de substrats choisi parmi les traitements suivants : un flammage, un traitement corona, un traitement plasma et leurs combinaisons,
§ un module de métallisation non électrolytique comprenant des moyens de projection de solutions,
§ un module de réalisation d'une couche de finition par application d'une composition liquide réticulable ou par épaississement électrolytique

Le module de traitement physique de surface comprend un moyen de traitement physique de la surface choisi parmi les moyens de traitement suivants : une torche à plasma ou un poste de flammage. Un moyen de traitement chimique de la surface choisi parmi les moyens de traitement suivants : un dispositif de fluoration, des pistolets pour la projection de solutions chimiques ou une cabine de polissage, peut être présent. Le dispositif de fluoration est équipé d'une enceinte sous pression réduite et de moyens de projection d'une solution gazeuse de gaz inerte (argon) contenant du fluor, il peut s'agir par exemple d'un appareil commercialisé par la société AIR LIQUIDE^{®}. La cabine de polissage comprend des moyens d'application d'une solution à base d'oxyde de terres rares, par exemple des pistolets HVLP, des moyens de polissage, par exemple des patins rotatifs ainsi que des moyens de rinçage de la surface ainsi polie, par exemple des pistolets HVLP.

Le module de métallisation non électrolytique comprend des moyens de métallisation non électrolytique qui sont des moyens courants de projection de solutions, notamment ceux décrits dans FR-A-2 763 962. Ces moyens de projection comprennent par exemple une série de pistolets « grand volume et basse pression » HVLP (High Volume Low Pressure) de projection, lesdits pistolets étant chacun reliés à une ou plusieurs pompes alimentées par une solution. Un premier système pompe/pistolet est prévu pour l'étape de mouillage. Un second système pompe/pistolet est prévu pour l'étape de sensibilisation et un troisième pour le rinçage. Un troisième système pompe/pistolet peut être prévu pour l'étape dite « d'activation blanche ». La projection des solutions métalliques d'oxydant et de réducteur se fait simultanément à l'aide d'au moins deux systèmes pompe/pistolet : l'un pour la solution d'oxydant et l'autre pour la solution de réducteur. Pour la projection de la solution oxydante, le nombre de pistolets est de 1 à 30 pistolets reliés à au moins une pompe. Il en est de même pour la projection de la solution de réducteur qui compte de 1 à 30 pistolets. Un dernier système pompe/pistolet est prévu pour le rinçage après la projection des solutions de métallisation.

Le module de métallisation non électrolytique peut comprendre aussi des moyens de séchage du film métallique, par exemple à l'aide d'un système air comprimé pulsé à 5 bars/air pulsé à une température de 20 à 40°C.

Le module de réalisation d'une couche de finition comprend soit des moyens d'application d'une composition liquide réticulable de finition, par exemple des pistolets HVLP (High Volume Low Pressure) de projection, soit des moyens de réalisation d'un épaississement électrolytique de la surface métallisée, notamment un bain électrolytique rempli de solution contenant des électrolytes, au moins une électrode et un dispositif permettant la circulation d'un courant électrique.

Le module de métallisation non électrolytique est équipé de moyens de séchage du film métallique de préférence lorsque le dispositif selon l'invention prévoit ensuite un module de réalisation d'une couche de finition qui comprend des moyens d'application d'une composition liquide réticulable de finition. Lorsque le module de réalisation d'une couche de finition est constitué de moyens d'application d'une composition liquide réticulable de finition, notamment un vernis, le dispositif selon l'invention comprend alors avantageusement des moyens de réticulation de la couche de finition. Ces derniers comprennent des systèmes thermiques par exemple des lampes à infrarouges ou des systèmes optiques à base de lampes ultra-violets. La température de réticulation est de 10°C à 300°C, selon le vernis utilisé.

Selon un mode de réalisation préféré du dispositif de l'invention, les substrats à métalliser sont placés sur un convoyeur, par exemple à bande et à picots, qui permet leur acheminement d'un module à un autre. De préférence, le convoyeur est équipé de moyens de mise en rotation des substrats sur eux-mêmes.

Le dispositif selon l'invention comprend, selon un mode de réalisation préféré, un module de traitement préalable de la surface qui est constitué de moyens de prétraitement d'accrochage de la surface ainsi que de moyens d'application d'un revêtement de base.

Les moyens de prétraitement d'accrochage de la surface du substrat sont les mêmes que les moyens de traitement physique ou chimique de surface décrit ci-dessus.

Les moyens d'application d'un revêtement de base sont par exemple les mêmes que les moyens d'application d'une composition liquide réticulable de finition tels que décrits ci-dessus et, en outre, le dispositif selon l'invention peut comprendre des moyens de réticulation de la couche de revêtement de base. Ces derniers comprennent des systèmes thermiques par exemple des lampes à infrarouges ou des systèmes optiques à base de lampes ultra-violets. La température de réticulation est de 10°C à 300°C, selon le vernis utilisé.

En outre, un des modes de réalisation préférés de l'invention est caractérisé en ce que le dispositif selon l'invention comporte des moyens de retraitement et de recyclage des effluents.

La récupération des effluents se fait de préférence au moyen de canaux récupérateurs, comme des écrans à chicane, qui dirigent les effluents vers un conteneur de récupération, qui ont pour but de protéger la mécanique du convoyeur sur lequel sont disposés les substrats à métalliser.

La décantation et la séparation du filtrat et des boues peut s'effectuer au moyen d'un décanteur ou d'un dispositif à débordement.

La distillation est réalisée à l'aide d'appareillages comprenant un ou plusieurs bouilleurs et une ou plusieurs colonnes réfrigérées.

L'eau purifiée est acheminée vers les différents modules du procédé pour être réutilisée, grâce à des moyens d'acheminement de liquide, par exemple des conduits et des pompes.

La présente invention vise aussi un substrat métallisé obtenu par le procédé tel que décrit plus haut, le substrat étant par exemple un verre creux notamment à usage cosmétique, une pièce d'automobile, une pièce pour la domotique ou pour l'aéronautique.

La présente invention a également pour objet un substrat métallisé obtenu par le procédé tel que décrit précédemment, le substrat étant notamment une pièce pour l'électronique telle une piste conductrice, une antenne d'étiquette radiofréquence (RFID : radio frequency identification) ou un revêtement de blindage électromagnétique

L'invention sera mieux comprise à la lecture de la description qui suit d'exemples de mise en oeuvre du procédé et de réalisation du dispositif concernés, en référence aux dessins annexés sur lesquels :
- la figure 1 représente un schéma global du procédé selon l'invention,
- la figure 2 représente un schéma d'un dispositif selon l'invention,
- la figure 3 représente une vue en coupe transversale d'un substrat métallisé par le procédé selon l'invention,
- la figure 4 représente une vue en coupe transversale d'un autre substrat métallisé par le procédé selon l'invention.

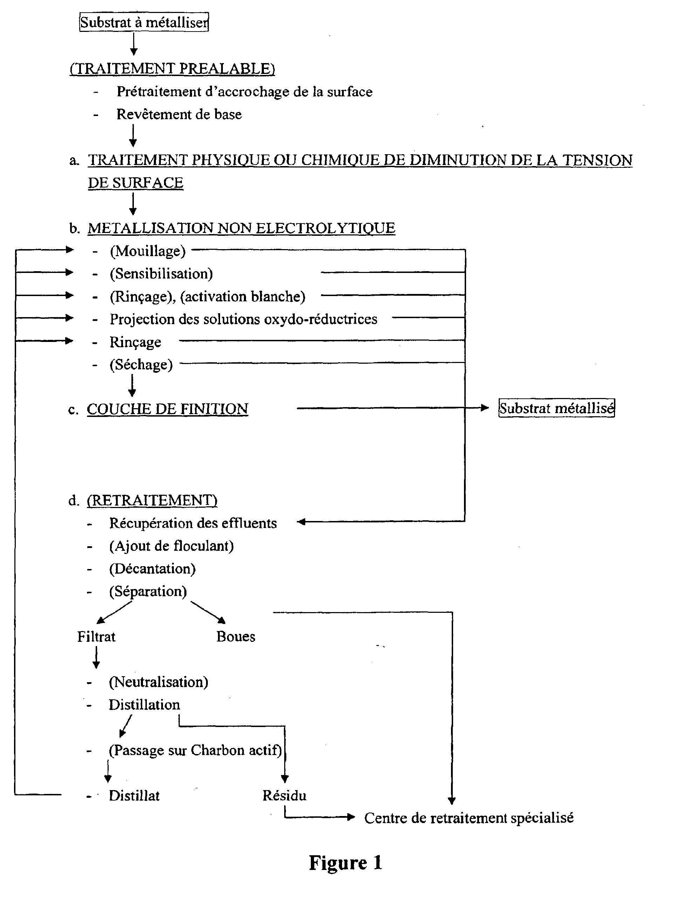

Sur la figure 1 est représenté un schéma récapitulatif des étapes essentielles et optionnelles du procédé selon l'invention.

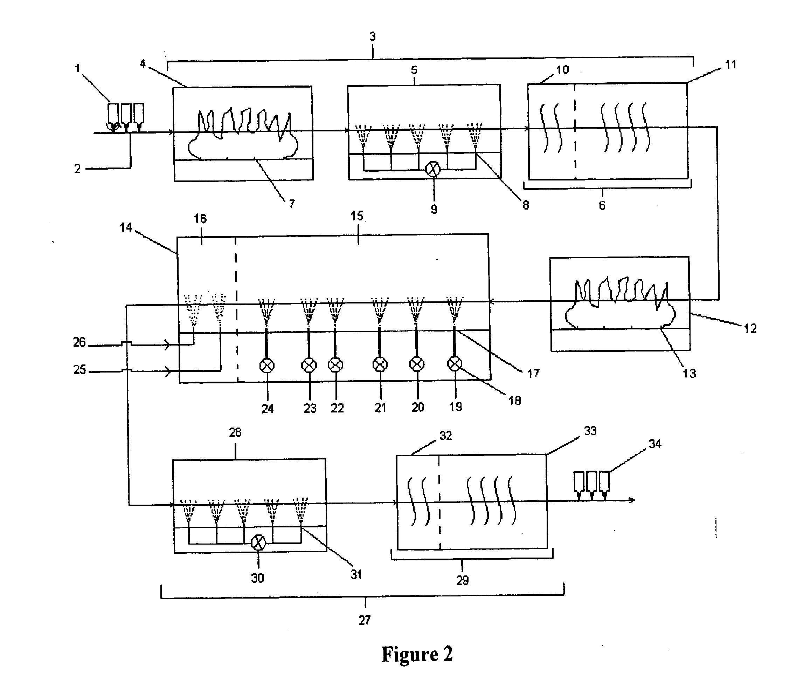

La figure 2 est une représentation schématique d'un dispositif pour réaliser un procédé conforme à l'invention. Ce dispositif comprend les quatre modules suivants :
§ un module optionnel de traitement préalable 3,
§ un module de traitement physique de surface 12,
§ un module de métallisation non électrolytique 14,
§ un module de réalisation d'une couche de finition 27.

Le module de traitement préalable 3 comprend une cabine de prétraitement d'accrochage de la surface 4, une cabine pour l'application d'un vernis de base 5 et une cabine de réticulation du vernis 6. La cabine de prétraitement d'accrochage de la surface 4 est par exemple un poste de flammage muni de brûleurs 7. La cabine pour l'application d'un vernis de base 5 est munie de pistolets 8 reliés à une pompe 9, elle-même reliée à un réservoir de vernis de base. La cabine de réticulation du vernis 6 comporte deux zones : une première zone pour l'évaporation du solvant 10 grâce à des lampes à infrarouge et une deuxième zone de réticulation 11 par cuisson UV/IR.

Le module de traitement physique de surface 12 est par exemple un poste de flammage muni de brûleurs 13.

Le module de métallisation non électrolytique 6 comporte deux zones : une première dite « de projection » 15 et une seconde, optionnelle, dite « de séchage » 16. La zone de projection 15 est équipée de pistolets 17 reliés à des pompes 18, chacune des pompes 18 étant reliée à un bac de solution qui lui est propre. La pompe 19 est réservée au mouillage de la surface. La pompe 20 est prévue pour l'étape de sensibilisation de la surface du substrat et la pompe 21 pour le rinçage. Les pompes 22 et 23 sont des pompes reliées aux solutions oxydo-réductrices. La pompe 24 est une pompe de rinçage.

La zone optionnelle de séchage 16 est constituée par un pistolet 25 à air comprimé pulsé à 5 bars puis un pistolet 26 à air pulsé dont la température est de l'ordre de 30°C.

Le module de réalisation d'une couche de finition 28 comprend :
- soit une cabine pour l'application d'un vernis de protection de finition 28, qui est équipée de pistolets 31 de projection reliés à une pompe 30, et d'une cabine de réticulation du vernis de protection 29. La cabine de réticulation du vernis de protection 29 comporte deux zones : une première zone pour l'évaporation du solvant 32 grâce à des lampes à infrarouge et une deuxième zone de réticulation 33 par cuisson UV/IR,
- soit une cabine d'épaississement électrolytique (non représentée), constituée d'une cuve contenant un bain de solution électrolytique et d'électrodes entre lesquelles circule un courant suffisant pour réaliser un épaississement électrolytique. Une des électrodes plonge dans le bain de solution électrolytique et l'autre est reliée au substrat métallisé.

Au cours d'un procédé utilisant ce dispositif, le substrat à métalliser 1 est placé sur un convoyeur 2 qui l'achemine vers le module optionnel de traitement préalable 3 dans lequel il est d'abord soumis à un prétraitement d'accrochage de sa surface dans la cabine de prétraitement d'accrochage de la surface 4, qui est par exemple un poste de flammage. Ensuite, l'application d'un vernis de base 5 est réalisée par projection dans la cabine d'application d'un vernis de base 5. Le substrat ainsi verni est ensuite dirigé vers la cabine de réticulation du vernis de base 6. Le substrat ainsi prétraité est ensuite acheminé vers un module de traitement physique de surface 12. Ce module de traitement physique de surface 12 est par exemple un poste de flammage muni de brûleurs 13.
Le substrat est ensuite dirigé vers le module de métallisation 14 qui est installé à la suite du module de traitement physique de surface 12. Dans la zone de projection 15, la pompe 19 réalise le mouillage de la surface, par exemple avec de l'eau. Puis la pompe 20 projette une solution de chlorure stanneux. Cette sensibilisation est suivie d'une étape de rinçage, par exemple avec de l'eau, au moyen de la pompe 21. Les pompes 22 et 23 projettent ensuite les solutions oxydo-réductrices nécessaires à la réalisation du film métallique. La pompe 22 est par exemple reliée à la solution d'ions métalliques et la pompe 23 est reliée à la solution de réducteur. L'actionnement de ces pompes peut être simultané ou consécutif. A la suite de la métallisation, une étape de rinçage est prévue au moyen de la pompe 24 reliée à une solution de liquide de rinçage, par exemple de l'eau. Le substrat entre ensuite dans la zone optionnelle de séchage 16 où le pistolet 25 à air comprimé pulsé à 5 bars puis le pistolet 26 à air pulsé dont la température est de l'ordre de 30°C induisent le séchage de la surface métallisée. Le substrat ainsi métallisé est enfin dirigé vers le module optionnel de réalisation d'une couche de finition 19 dans lequel est réalisée l'application d'un vernis de protection de finition suivi de sa réticulation dans la cabine de réticulation du vernis de protection 29. Le substrat métallisé 34 par le procédé selon l'invention peut être déchargé après la réticulation du vernis de protection.

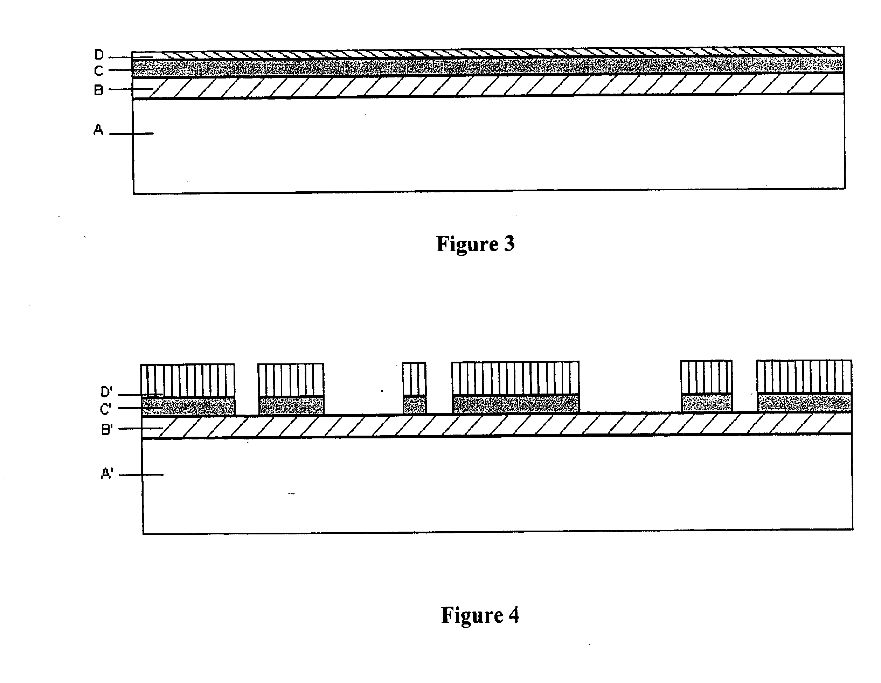

Les figures 3 et 4 représentent chacune une vue schématique en coupe transversale d'un substrat métallisé par un mode de réalisation du procédé de l'invention.

Sur la figure 3, le substrat métallisé est constitué de 4 couches A, B, C et D. La couche A représente le substrat, par exemple un substrat rigide en verre. La couche B est la couche de vernis de base, par exemple un vernis époxy commercialisé par la société AKZO NOBEL^{®}. La couche C est le film métallique, par exemple un film d'argent et la couche D est le vernis de protection, par exemple un vernis époxy commercialisé par la société AKZO NOBEL^{®}.

Sur la figure 4, le substrat métallisé est aussi constitué de 4 couches appelées A', B', C' et D'. A' représente un substrat souple, par exemple un textile enduit en PVC. La couche B' est un vernis de base, par exemple un vernis alkyde de la société LA CELLIOSE^{®}. La couche C' est la couche métallique, par exemple de nickel, obtenue par métallisation avec masquage d'une partie de la surface. La couche D' est une couche de cuivre, qui est le résultat d'un épaississement électrolytique dans un bain contenant du sulfate de cuivre. Le dépôt de cette couche D' est sélectif et a lieu uniquement sur la surface de la couche C'.

### EXEMPLES

### Exemple 1 : Métallisation argent d'un substrat rigide en verre creux

Par projection au moyen de pistolets HVLP, on applique sur un flacon cylindrique en verre, de 10 cm de hauteur et de 5 cm de diamètre extérieur, une solution à base de silane à 0,1 g/l commercialisée par DEGUSSA^{®} sous le nom GLYMO^{®}. Un vernis époxy commercialisé par AKZO NOBEL^{®} est ensuite projeté, également au moyen de pistolets HVLP, sur le flacon en rotation. On chauffe dans une enceinte thermique à 280°C pendant 10 minutes.

Le flacon est ensuite placé dans une enceinte de flammage à trois bruleurs au gaz naturel. Le flacon est mis en rotation sur lui-même à une vitesse de 120 tours/minute. La température de la flamme est réglée à 1400°C et la durée du flammage est de 20 secondes.

Le flacon ainsi traité est placé au sein d'un dispositif de métallisation dans lequel il est soumis successivement :
§ à une sensibilisation de la surface par projection, au moyen de pistolets HVLP, d'une solution à base de chlorure stanneux pendant 5 secondes,
§ à un rinçage de la solution de sensibilisation par projection d'eau pendant 5 secondes, au moyen de pistolets HVLP,
§ à une projection d'une solution dite « d'activation blanche » à base de nitrate d'argent en solution aqueuse à 10% contenant un tensioactif anionique pendant 8 secondes, au moyen de pistolets HVLP,
§ à une projection d'une solution aqueuse à base de nitrate d'argent de concentration de 2 g/l pendant 25 secondes simultanément avec une projection d'une solution aqueuse d'hydrazine à 7 g/l, au moyen de pistolets HVLP,
§ à un rinçage à l'eau pendant 5 secondes, par projection au moyen de pistolets HVLP,
§ à un séchage par alternance d'air comprimé pulsé à 5 bars à température ambiante et d'air pulsé à pression normale à 30°C.

Le flacon ainsi métallisé est verni par projection, au moyen de pistolets HVLP, d'un vernis époxy de la société LA CELLIOSE^{®} pendant 10 secondes. Il est ensuite chauffé dans une enceinte thermique à 280°C pendant 10 minutes.

On obtient ainsi un flacon en verre métallisé à l'argent.

### Exemple 2 : Métallisation argent d'un substrat rigide en verre creux

Par projection au moyen de pistolets HVLP, on applique sur un flacon cylindrique en verre, de 10 cm de hauteur et de 5 cm de diamètre extérieur, une solution à base d'oxyde de cérium à 250 g/l commercialisée par POLIR-MALIN^{®} sous le nom GLASS POLISHING^{®}, on polit dans une cabine de polissage qui comprend des patins rotatifs et on rince par projection d'eau distillée au moyen de pistolets HVLP.

Le flacon ainsi traité est placé au sein d'un dispositif de métallisation dans lequel il est soumis successivement :
§ à une sensibilisation de la surface par projection, au moyen de pistolets HVLP, d'une solution à base de chlorure stanneux pendant 5 secondes,
§ à un rinçage de la solution de sensibilisation par projection d'eau pendant 5 secondes, au moyen de pistolets HVLP,
§ à une projection d'une solution aqueuse à base de nitrate d'argent de concentration de 2 g/l pendant 25 secondes simultanément avec une projection d'une solution aqueuse à base de gluconate de sodium à 15 g/l, au moyen de pistolets HVLP,
§ à un rinçage à l'eau pendant 5 secondes, par projection au moyen de pistolets HVLP,
§ à un séchage par alternance d'air comprimé pulsé à 5 bars à température ambiante et d'air pulsé à pression normale à 30°C.

Le flacon ainsi métallisé est verni par projection, au moyen de pistolets HVLP, d'un vernis époxy de la société LA CELLIOSE^{®} pendant 10 secondes. Il est ensuite chauffé dans une enceinte thermique à 280°C pendant 10 minutes.

On obtient ainsi un flacon en verre métallisé à l'argent.

### Exemple 3 : Métallisation au nickel/cuivre d'un substrat souple en tissu polyester

Par projection au moyen de pistolets HVLP, on applique sur un tissu en polyester, dont les dimensions sont 10 cm par 10 cm et dont l'épaisseur est de 2 mm, un vernis polyuréthane commercialisé par la société LA CELLIOSER^{®}. On le chauffe dans une enceinte thermique à 40°C pendant 40 minutes.

Le tissu est ensuite placé dans une enceinte de flammage à trois bruleurs au gaz naturel. La face vernie du tissu est soumise au flammage : à une température de flamme de 1400°C et pendant 20 secondes. Le tissu ainsi traité est placé au sein d'un dispositif de métallisation dans lequel la face vernie et traitée par flammage est soumise successivement :
§ à un mouillage par projection d'eau, au moyen de pistolets HVLP, pendant 5 secondes,
§ à une projection d'une solution aqueuse de sulfate de nickel de concentration de 5 g/l pendant 30 secondes simultanément avec une projection d'une solution d'hypophosphite de sodium à 20 g/l, au moyen de pistolets HVLP,
§ à un rinçage à l'eau pendant 10 secondes, au moyen de pistolets HVLP.

Le textile ainsi métallisé est immergé dans un bain électrolytique de solution d'ions cuivre à 230 g/l. Une électrode est placée dans le bain et un courant de 1 A est appliqué entre l'électrode et le substrat. La durée de l'électrolyse est de 720 secondes et l'épaississement est de 20 microns.

On obtient ainsi un textile en polyester métallisé au nickel et épaissi au cuivre.

### Exemple 4 : Métallisation au nickel d'un substrat rigide en polymère

On soumet un bouchon de conteneur cosmétique, en ABS, de diamètre de 3 cm et dont la hauteur est de 2 cm, à un traitement plasma au moyen d'une torche à plasma commercialisées par PLASMATREAT^{®} sous la référence OPENAIR^{®}.

Le bouchon, ainsi traité est placé au sein d'un dispositif de métallisation dans lequel il est soumis successivement :
§ à une projection d'une solution aqueuse de sulfate de nickel de concentration de 5 g/l pendant 30 secondes simultanément avec une projection d'une solution de borohydrure de sodium à 20 g/l, au moyen de pistolets HVLP,
§ à un rinçage à l'eau pendant 10 secondes, au moyen de pistolets HVLP,
§ à un séchage par alternance d'air comprimé pulsé à 5 bars à température ambiante et d'air pulsé à pression normale à 30°C.

Le bouchon ainsi métallisé est verni par projection, au moyen de pistolets HVLP, d'un vernis époxy de la société LA CELLIOSE^{®} pendant 10 secondes. Il est ensuite chauffé dans une enceinte thermique à 280°C pendant 10 minutes.

On obtient ainsi un bouchon en ABS métallisé au nickel.

## Revendications

1. Procédé de métallisation de la surface d'un substrat **caractérisé en ce que** l'on met en oeuvre les étapes suivantes :
a. traitement physique du substrat avant métallisation de sorte que l'énergie de surface du substrat soit supérieure ou égale à 50 dynes, le traitement physique étant choisi parmi les traitements suivants : un flammage, un traitement corona, un traitement plasma et leurs combinaisons,
b. métallisation non électrolytique de la surface du substrat traitée à l'étape a., par projection d'une ou plusieurs solutions oxydo-réductrices sous forme d'aérosol(s),
c. réalisation d'une couche de finition sur la surface métallisée qui est l'application d'une composition liquide réticulable ou un épaississement électrolytique de la surface métallisée.

2. Procédé de métallisation selon la revendication 1, caractérisé en que le traitement de l'étape a. est réalisé de sorte que l'énergie de surface du substrat soit supérieure ou égale à 55 dynes, de préférence supérieure ou égale à 60 ou 65 dynes, et encore plus préférentiellement supérieure ou égale à 70 dynes.

3. Procédé de métallisation selon la revendication 1, caractérisé en que le traitement physique de l'étape a. est choisi parmi les traitements suivants : un flammage, un traitement plasma et leurs combinaisons.

4. Procédé de métallisation selon la revendication 1, caractérisé en que le métal de l'étape b. est choisi dans le groupe de métaux suivants: argent, nickel, étain, leurs alliages et leurs juxtapositions, l'argent étant particulièrement préféré.

5. Procédé de métallisation selon l'une des revendications précédentes, **caractérisé en ce que** le substrat est soumis, préalablement à l'étape a., aux étapes suivantes :
§ prétraitement d'accrochage de la surface du substrat,
§ application d'au moins une couche d'un revêtement de base.

6. Procédé de métallisation selon l'une quelconque des revendications précédentes, **caractérisé en ce que** l'on procède au retraitement et au recyclage des effluents issus des différentes étapes du procédé et **en ce que** le retraitement et le recyclage des effluents comprennent, dans l'ordre, les étapes suivantes :
- récupération des effluents dans un conteneur,
- distillation dans un évaporateur,
- réutilisation du distillat dans le procédé de métallisation ou rejet à l'égout.

7. Procédé de métallisation de substrats, selon l'une quelconque des revendications précédentes, **caractérisé en ce que** l'on traite en ligne sans rupture de chaîne, une pluralité de substrats.

8. Dispositif pour la mise en oeuvre du procédé selon l'une quelconque des revendications précédentes, **caractérisé en ce qu'**il comprend les éléments suivants :
§ un module de traitement physique de surface de substrats choisi parmi les traitements suivants : un flammage, un traitement corona, un traitement plasma et leurs combinaisons,
§ un module de métallisation non électrolytique comprenant des moyens de projection de solutions,
§ un module de réalisation d'une couche de finition par application d'une composition liquide réticulable ou par épaississement électrolytique.

9. Substrat métallisé obtenu par le procédé selon l'une quelconque des revendications 1 à 7, **caractérisé en ce que** ce substrat est un verre creux notamment à usage cosmétique, une pièce d'automobile, une pièce pour la domotique ou pour l'aéronautique.

10. Substrat métallisé obtenu par le procédé selon l'une quelconque des revendications 1 à 7, **caractérisé en ce que** ce substrat est une pièce d'électronique telle une piste conductrice, une antenne d'étiquette radiofréquence ou un revêtement pour un blindage électromagnétique.

## Patentansprüche

1. Metallisierungsverfahren der Oberfläche eines Substrats, **dadurch gekennzeichnet, dass** man die folgenden Schritte umsetzt:
a. physikalische Behandlung des Substrats vor der Metallisierung derart, dass die Oberflächenenergie des Substrats größer oder gleich 50 dyne ist, wobei die physikalische Behandlung aus den folgenden Behandlungen ausgewählt ist: Flammspritzen, Coronabehandlung, Plasmabehandlung sowie ihre Kombinationen,
b. nicht elektrolytische Metallisierung der Oberfläche des in Schritt a. behandelten Substrats durch Spritzen einer oder mehrerer Oxydoreduktionslösungen in Form von Aerosol(en),
c. Herstellung einer Endschicht auf der metallisierten Oberfläche, die das Auftragen einer flüssigen vernetzbaren Zusammensetzung oder ein elektrolytisches Verdicken der metallisierten Oberfläche ist.

2. Metallisierungsverfahren nach Anspruch 1, **dadurch gekennzeichnet, dass** die Behandlung des Schritts a. derart ausgeführt wird, dass die Oberflächenenergie des Substrats größer oder gleich 55 dyne ist, vorzugsweise größer oder gleich 60 oder 65 dyne und noch bevorzugter größer oder gleich 70 dyne.

3. Metallisierungsverfahren nach Anspruch 1, **dadurch gekennzeichnet, dass** die physikalische Behandlung des Schritts a. aus den folgenden Behandlungen ausgewählt ist: Flammspritzen, Plasmabehandlung sowie ihren Kombinationen.

4. Metallisierungsverfahren nach Anspruch 1, **dadurch gekennzeichnet, dass** das Metall des Schritts b. aus der Gruppe der folgenden Metalle ausgewählt ist: Silber, Nickel, Zinn, ihren Legierungen und ihre Nebeneinanderlegungen, wobei Silber besonders bevorzugt ist.

5. Metallisierungsverfahren nach einem der vorhergehenden Ansprüche, **dadurch gekennzeichnet, dass** das Substrat vor dem Schritt a. den folgenden Schritten unterzogen wird:
* Haftvorbehandlung der Oberfläche des Substrats,
* Auftragen mindestens einer Schicht einer Basisbeschichtung.

6. Metallisierungsverfahren nach einem der vorhergehenden Ansprüche, **dadurch gekennzeichnet, dass** man die Aufbereitung und das Recycling der Ableitungen, die aus den unterschiedlichen Schritten des Verfahrens hervorgehen, durchführt, und dass die Aufbereitung und das Recycling der Ableitungen die folgenden Schritte in dieser Reihenfolge aufweisen:
- Rückgewinnung der Ableitungen in einem Behälter,
- Destillation in einem Verdampfer,
- Wiederverwendung des Destillats in dem Metallisierungsverfahren oder Ableiten in die Abwasserkanalisation.

7. Metallisierungsverfahren von Substraten nach einem der vorhergehenden Ansprüche, **dadurch gekennzeichnet, dass** man in Linie ohne Kettenunterbrechung eine Vielzahl von Substraten behandelt.

8. Vorrichtung zur Umsetzung des Verfahrens nach einem der vorhergehenden Ansprüche, **dadurch gekennzeichnet, dass** sie die folgenden Elemente aufweist:
* ein physikalisches Oberflächenbehandlungsmodul von Substraten, das aus den folgenden Behandlungen ausgewählt sind: Flammspritzen, Coronabehandlung, Plasmabehandlung sowie ihren Kombinationen,
* ein nicht elektrolytisches Metallisierungsmodul, das Mittel zum Spritzen von Lösungen aufweist,
* ein Herstellungsmodul einer Endschicht durch Auftragen einer flüssigen vernetzbaren Zusammensetzung oder durch elektrolytisches Verdicken.

9. Metallisiertes Substrat, das durch das Verfahren nach einem der Ansprüche 1 bis 7 erzielt wird, **dadurch gekennzeichnet, dass** dieses Substrat ein Hohlglas ist, insbesondere für kosmetischen Gebrauch, ein Automobilbauteil, ein Teil für die Hausautomatisierung oder für die Luftfahrt.

10. Metallisiertes Substrat, das durch das Verfahren nach einem der Ansprüche 1 bis 7 erzielt wird, **dadurch gekennzeichnet, dass** dieses Substrat ein Elektronikteil ist, wie zum Beispiel eine Leiterbahn, ein Funkfrequenz-Antennenetikett oder eine Beschichtung für eine elektromagnetische Schirmung.

## Claims

1. Method of surface metallization of a substrate **characterized in that** the following stages are implemented:
a. physical treatment of the substrate before metallization, so that the surface energy of the substrate is greater or equal to 50 dynes, wherein the physical treatment is selected from the following treatments: a flame treatment, a corona treatment, a plasma treatment and their combinations,
b. non electrolytic metallization of the surface of the substrate processed in stage 'a', by projection of one or more redox solutions as aerosol(s),
c. execution of a finish layer on the plated surface, which is the application of a crosslinkable liquid composition or an electrolytic thickening of the plated surface.

2. Method of metallization according to claim 1, **characterized in that** the physical treatment of stage 'a' is carried out so that the surface energy of the substrate is greater or equal to 55 dynes, preferably greater or equal to 60 or 65 dynes, and more preferably greater or equal to 70 dynes.

3. Method of metallization according to claim 1, **characterized in that** the physical treatment of stage 'a' is selected from the following treatments: a flame treatment, a plasma treatment and their combinations.

4. Method of metallization according to claim 1, **characterized in that** the metal of the 'b' stage is selected from the group of following metals: silver, nickel, tin, their alloys and their juxtapositions, silver being especially preferred.

5. Method of metallization according to one of the previous claims, **characterized in that** the substrate is subjected, prior to stage 'a', to the following stages:
§ surface coupling pretreatment of the substrate,
§ application of at least one layer of a base coating.

6. Method of metallization according to any one of the previous claims, **characterized in that** the reprocessing and the recycling of the effluents coming from the different stages of the method are carried out, and in which the reprocessing and the recycling of the effluents consist in, in order, the following stages:
- recovery of the effluents in a container,
- distillation in a evaporator,
- re-use of distillate in the metallization method or sewage disposal.

7. Method of metallization of substrates, according to one any of the previous claims, **characterized in that** a plurality of substrates are processed in line without rupture of the chain.

8. Device for the implementation of the method according to any one of the previous claims, **characterized in that** it comprises the following elements:
§ a module of physical treatment of the surface of substrates, wherein the physical treatment is selected from the following treatments: a flame treatment, a corona treatment, a plasma treatment and their combinations,
§ a non electrolytic metallization module, comprising means for projecting solutions,
§ a module for execution of a finish layer by application of a crosslinkable liquid composition or by electrolytic thickening.

9. Metallized substrate obtained by the method according to any one of the claims 1 to 7, **characterized in that** this substrate is a hollow glass, in particular for cosmetic use, a car part, a part for home automation or for aeronautics.

10. Metallized substrate obtained by the method according to any one of the claims 1 to 7, characterized that this substrate is an electronics part such as a conductive track, a radio frequency identification tag antenna or a coating for electromagnetic shielding.
